# EUROPÄISCHE PATENTSCHRIFT

(11) **EP 0 478 924 B1**
(45) Veröffentlichungstag und Bekanntmachung des Hinweises auf die Patenterteilung: **30.11.1994**
(21) Anmeldenummer: 91113040.9
(22) Anmeldetag: 02.08.1991
(51) Int. Cl.: B60G 17/052

(54) **Anlage zum gesteuerten Heben und Senken des Fahrzeugaufbaues von mit Luftfederung versehenen, niveaugeregelten Fahrzeugen**
System for controlled raising and lowering of the body of a vehicle equipped with air suspension and height control
Installation pour le levage et la descente contrôlés de la caisse d'un véhicule équipé d'une suspension à air à assiette réglée

(30) Priorität: 14.09.1990 DE 4029273
(43) Veröffentlichungstag der Anmeldung: 08.04.1992
(73) Patentinhaber: KNORR-BREMSE AG, 80710 München (DE)
(72) Erfinder: Claire, Michel, F-92100 Boulogne Billancourt (FR)

(56) Entgegenhaltungen:
- DE-A- 2 942 081
- FR-A- 2 616 721
- US-A- 3 214 188
- US-A- 3 912 293
- PATENT ABSTRACTS OF JAPAN, vol. 10, no. 270 (M-517)(2326)13. September 1986; & JP-A-61 094 807
- PATENT ABSTRACTS OF JAPAN, vol. 9, no. 73 (M-368)(1796) 3.April 1985; & JP-A-59 202 920

## Beschreibung

Die Erfindung betrifft eine Anlage nach dem Gattungsbegriff des Patentanspruches 1.

Bei Anlagen der gattungsgemäßen Art (FR-A-2 616 721) ist ein Schaltmechanismus vorgesehen, mittels welchem auf das die Niveauregelventile betätigende Gestänge eingewirkt werden kann, um bei Bedarf willkürlich ein Befüllen oder Entleeren der von den Niveauregelventilen gespeisten Luftfederbälge beider Seiten einer Fahrzeugachse zu vollziehen. Der Betätigungsmechanismus ist mit einem Schalter versehen, welcher über einen Kabelzug die mit dem Gestänge verbundenen Betätigungshebel beider Niveauregelventile in ihrer Winkellage verstellt; es ist außerdem ein mit dem Kabelzug in Wirkverbindung stehender Schieber vorgesehen, mittels welchem bei willkürlicher Betätigung der Niveauregelventile ein Belüften der Fahrzeugbremsen aus dem Vorratsbehälter der Niveauregelanlage geschieht.

Das willkürliche Be- und Entlüften der Luftfederbälge mit Hilfe des Schalt- und Betätigungsmechanismus kann nur mit einer gewissen Verzögerung vollzogen werden, da der Strömungsquerschnitt innerhalb der Niveauregelventile bewußt begrenzt ist, um bei dynamischen Reaktionen des Fahrzeugaufbaues einen zu starken Luftverbrauch zu vermeiden. Im besonderen sind auch Drosselorgane innerhalb der Niveauregelventile vorgesehen, welche bei Betätigung der vorstehend genannten Art vor allem das Absenken, d.h. Entleeren der Luftfederbälge auf einen Zeitraum von mehreren Minuten erstrecken.

Davon ausgehend besteht die Aufgabe der Erfindung darin, eine Anlage der gattungsgemäßen Art so auszugestalten, daß das unabhängig vom Beladungszustand willkürlich vorgenommene, also gesteuerte Be- und Entlüften der Luftfederbälge beschleunigt vollzogen werden kann. Diese Maßnahme soll bevorzugt im Stillstand des Fahrzeug ermöglicht sein, wenn der Fahrzeugaufbau, z.B. dem Niveau einer Laderampe anzupassen ist.

Zur Lösung dieser Aufgabe dienen die Merkmale nach dem Kennzeichnungsteil des Patentanspruches 1.

Durch das in der Verbindung zwischen dem Niveauregelventil und dem Luftfederbalg bzw. den Luftfederbälgen vorgesehene, wahlweise in Funktionsstellung schaltbare Relaisventil ist es möglich, über den großen Querschnitt des Relaisventils ein verzögerungsfreies Befüllen oder Leeren des Luftfederbalgs bzw. der Luftfederbälge vorzunehmen. Der hierfür vorgesehene Schaltmechanismus ist von einfachem Aufbau, da das zum Umschalten erforderliche Schieberventil durch Druckluft aus dem Vorratsbehälter beaufschlagbar ist; der zum willkürlichen Heben oder Senken dienende Schaltmechanismus unter Verwendung z.B. eines Kabelzuges kann so ausgelegt sein, daß das zum Umschalten des Schieberventils die Verbindung zum Vorratsbehälter herstellende Schaltventil als auch das Niveauregelventil bzw. die Niveauregelventile über einen gemeinsamen Kabelzug betätigbar sind. Grundsätzlich ist es jedoch auch möglich, das Schaltventil getrennt von der Betätigung des Niveauregelventils manuell umzuschalten. Die für die Anlage verwendeten Schieber- bzw. Ventilelemente sind von an sich bekanntem Aufbau, so daß auch bestehende Anlagen jederzeit nachgerüstet werden können.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert:
- Fig.1: ist eine schematische Ansicht der erfindungsgemäßen Anlage in normaler Funktionsstellung des Niveauregelventils;
- Fig.2: ist eine der Fig.1 vergleichbare Ansicht der Anlage unter Darstellung der direkten Verbindung der Luftfederbälge mit dem durch das Niveauregelventil entsprechend Kabelzugbetätigung gesteuert beaufschlagten Relaisventil; und

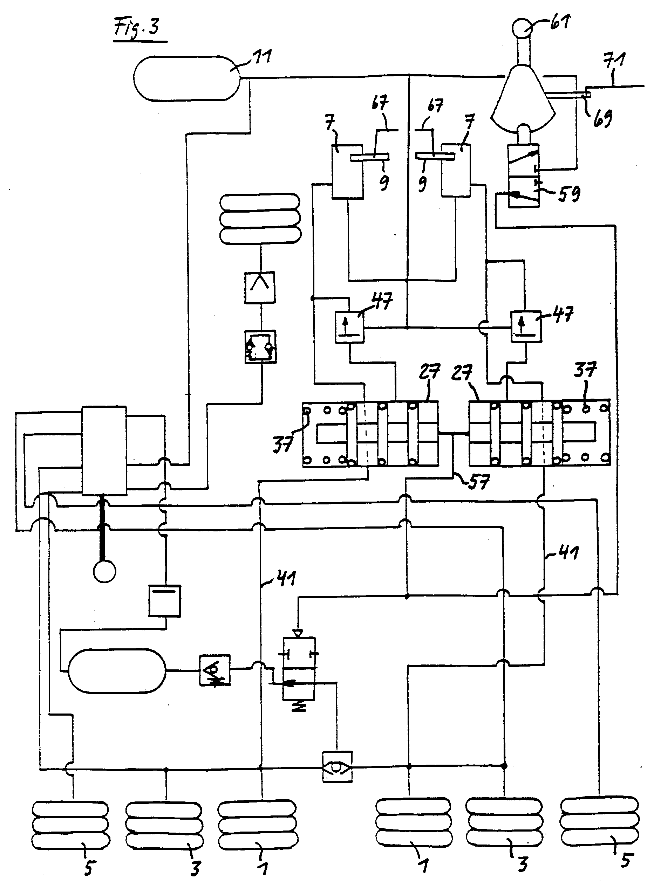

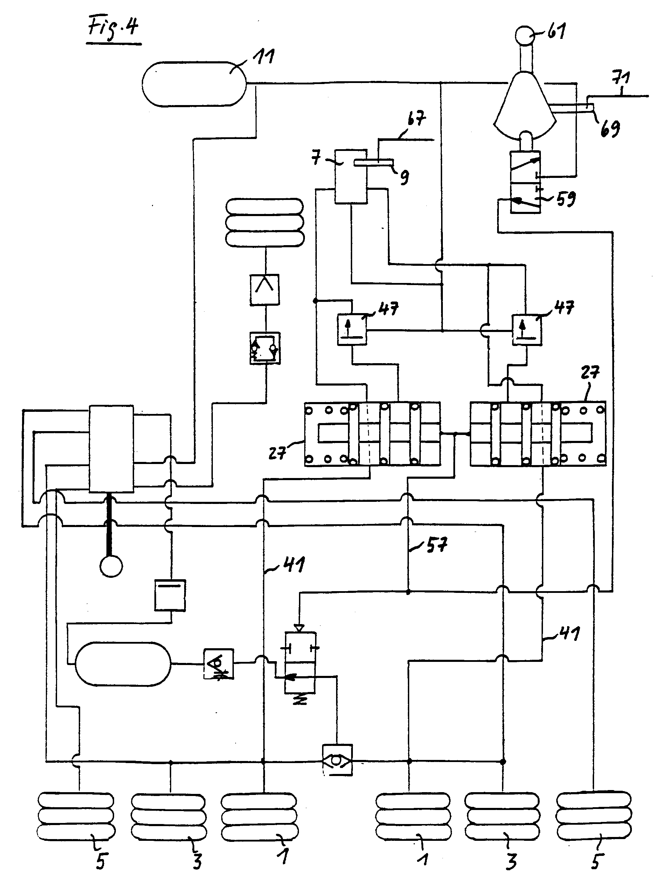

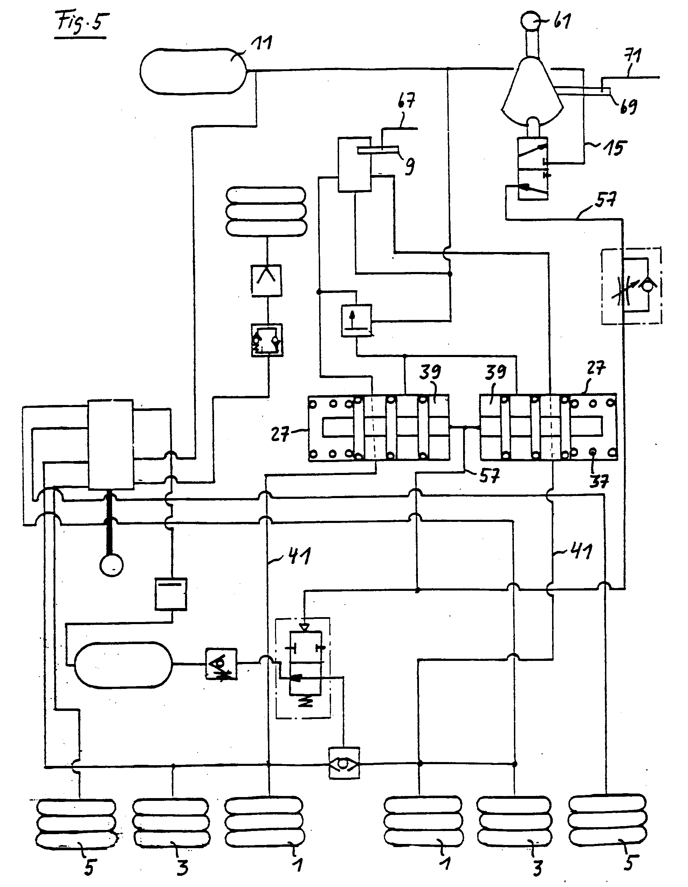

- Fig.3-5: sind Ansichten weiterer Schaltungsanordnungen der erfindungsgemäßen Anlage unter Variation der Anzahl der Niveauregelventile und/oder Relaisventile entsprechend erforderlicher Anpassung an die Niveauregulierung beider Seiten einer Achse bzw. eines Fahrzeugaufbaues.

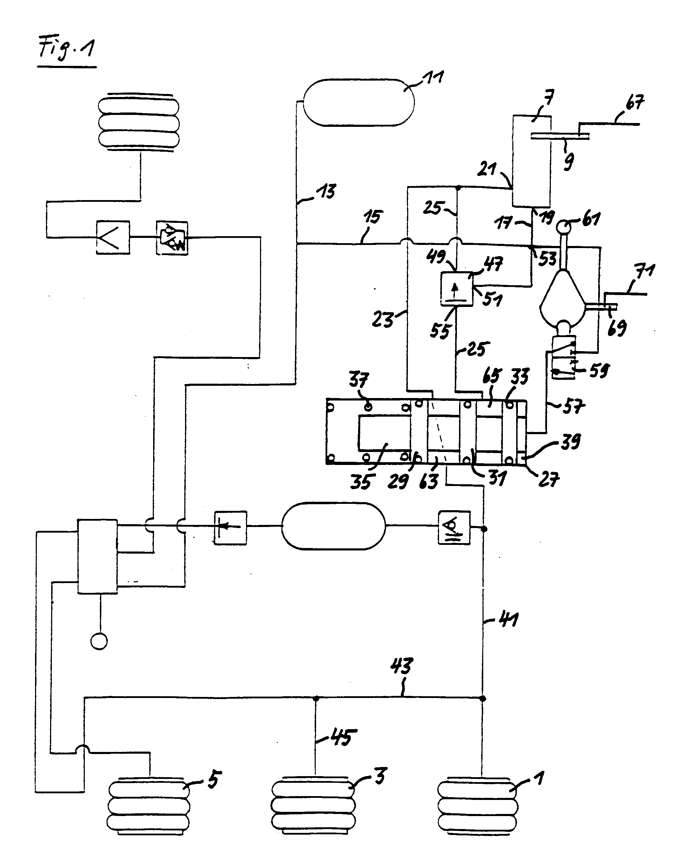

In Fig.1 der Zeichnung ist eine Anlage zum Heben und Senken des Fahrzeugaufbaues eines luftgefederten Fahrzeugs dargestellt, wobei es sich z.B. um die Anlage einer Seite der Hinterachse eines Fahrzeugs handeln kann. Die Anlage enthält im dargestellten Ausführungsbeispiel Luftfederbälge 1, 3 und 5, von welchen die Luftfederbälge 1 und 3 in herkömmlicher Weise auf der (nicht dargestellten) Achslagerung der Fahrzeugachse abgestützt sind, während der Luftfederbalg 5 als Bestandteil einer Hebeachse vorgesehen ist. Nachfolgend ist die Anlage unter Bezugnahme auf die Luftfederbälge 1 und 3 und deren Befüllung bzw. Entleerung beschrieben. Des weiteren ist der Anlage ein Niveauregelventil 7 zugeordnet, welches mit einem Betätigungshebel 9 versehen ist. Der Betätigungshebel 9 steht in an sich bekannter Weise über ein Gestänge mit einem Punkt der Achslagerung in Verbindung, derart, daß Niveauveränderungen des Fahrzeugaufbaues gegenüber der Achslagerung Winkelbewegungen des Gestänges und des Betätigungshebels 9 verursachen.

Der Anlage ist fernerhin ein Vorratsbehälter 11 zugeordnet, welcher über Leitungsabschnitte 13, 15 und 17 mit dem Einlaß 19 des Niveauregelventils 7 verbunden ist. Der Auslaß 21 des Niveauregelventils ist mit Leitungsabschnitten 23 und 25 verbunden, welche in seitliche Öffnungen eines Schieberventils 27 münden. Innerhalb des Schieberventils 29 befindet sich ein mit drei Kolben 29, 31, 33 versehener Schieber 35, an dessen gemäß Darstellung linker Seite eine Feder 37 einwirkt. An der gemäß Darstellung rechten Seite des Kolbens 33 befindet sich ein Druckraum 39, welcher in nachfolgend beschriebener Weise durch Druckluft aus dem Vorratsbehälter 11 beaufschlagbar ist, um den Schieber 35 nach links gerichtet gegen die Kraft der Feder 37 zu verschieben. Vom Schieberventil 27 zweigt ein Leitungsabschnitt 41 ab, welcher zum Luftfederbalg 1 führt. Ein weiterer, vom Leitungsabschnitt 41 abzweigender Leitungsabschnitt 43 ist über einen Leitungsabschnitt 45 mit dem zweiten Luftfedergbalg 3 der Anlage verbunden. Der Leitungsabschnitt 43 führt fernerhin zu weiteren Bestandteilen der Anlage, welche für das Verständnis der vorliegenden Erfindung nicht erforderlich sind.

Gemäß der Erfindung ist innerhalb des Leitungsabschnittes 25 ein Relaisventil 47 vorgesehen, dessen Steueranschluß 49 mit dem Auslaß 21 des Niveauregelventils in Verbindung steht. Der Drucklufteinlaß 51 des Relaisventils 47 ist über die Leitungsverknüpfung 53 und die Leitungsabschnitte 15, 13 mit dem Vorratsbehälter 11 verbunden, während der Druckluftauslaß 55 des Relaisventils mittels des Leitungsabschnittes 25 mit dem Schieberventil 27 verbunden ist.

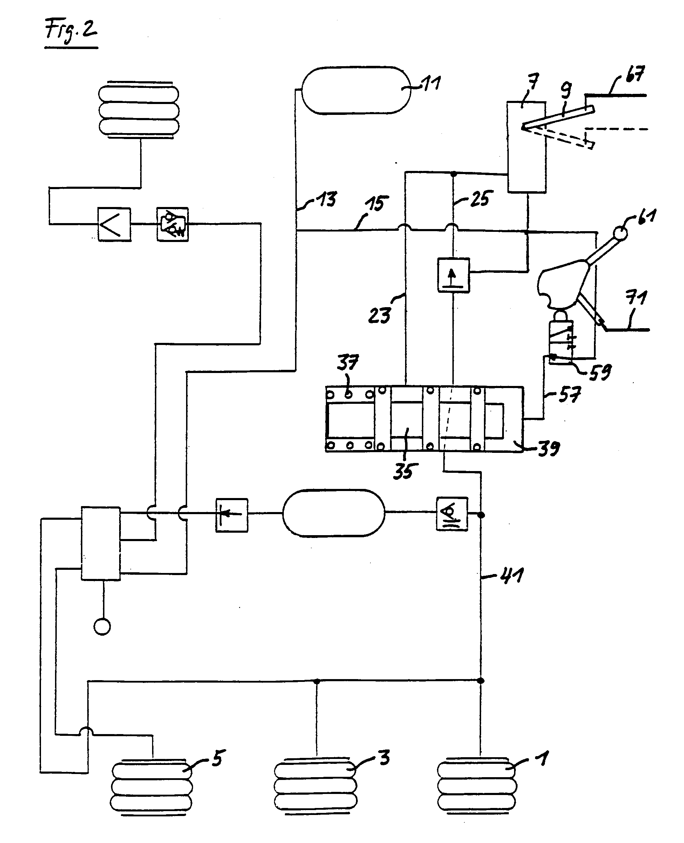

Der vorstehend genannte Druckraum 39 des Schieberventils ist an einen Leitungsabschnitt 57 angeschlossen, welcher in ein Schaltventil 59 mündet. Das Schaltventil 59 ist mechanisch schaltbar, so z.B. mit Hilfe eines Handgriffes 61, mittels welchem das Schaltventil in eine Position umschaltbar ist, in welcher der Leitungsabschnitt 57 mit dem gleichfalls an das Schaltventil angeschlossenen Leitungsabschnitt 15 und somit mit dem Vorratsbehälter 11 verbindbar ist. Bei Verbindung des Leitungsabschnittes 15 mit dem Leitungsabschnitt 57 und entsprechender Druckluftbeaufschlagung des Druckraumes 39 wird der Schieber 35 gegen die Kraft der Feder 37 in die in Fig.2 dargestellte Lage verschoben, während in der in Fig.1 wiedergegebenen Position das Schaltventil 59 den Leitungsabschnitt 57 und den Druckraum 39 entlüftet und demnach der Schieber 35 unter der Kraft der Feder 37 die in Fig.1 wiedergegebene Position einnimmt.

Die Wirkungsweise der vorstehend beschriebenen Anlage ist wie folgt:
In Fig.1 der Zeichnung ist die Position der Anlage bei in Fahrt befindlichem Fahrzeug wiedergegeben. Das Niveauregelventil, d.h. der Auslaß 21 desselben, befindet sich in direkter Verbindung mit den Luftfederbälgen 1 und 3, da das Schieberventil 27 die Leitungsabschnitte 23 und 41 über die Kammer 63 miteinander verbindet. Das Niveauregelventil arbeitet hierbei in bekannter Weise in Abhängigkeit von der Winkellage des vom (nicht dargestellten) Gestänge bewegten Betätigungshebels 9. Der Auslaß 21 des Niveauregelventils speist über den Leitungsabschnitt 25 auch Druckluft in den Steueranschluß 49 des Relaisventils 47 ein; dies ist jedoch ohne Wirkung, da der mit dem Druckluftauslaß 55 verbundene Leitungsabschnitt 25 in der im übrigen geschlossenen Kammer 65 zwischen den Kolben 31 und 33 mündet. Das Schaltventil 59 befindet sich in der in Fig.1 wiedergegebenen Lage, in welcher der Druckraum 39 entlüftet ist.

Gemäß Darstellung ist am Betätigungshebel 9 ein Kabel 67 angelenkt, während an einem mit dem drehbaren Handgriff 61 verbundenen Hebel 69 des Schaltventils 59 ein weiteres Kabel 71 befestigt ist. Es können auch andere Mittel zur Übertragung von Zug- bzw. Druckkräften anstelle der Kabel vorgesehen sein.

Soll das Niveau des Fahrzeugaufbaues, ausgehend von der Position nach Fig.1, angehoben oder abgesenkt werden, und zwar unter willkürlicher Betätigung des Nieveauregelventils 7, dann wird mit Hilfe eines mit dem Kabel 67 in Verbindung stehenden (nicht dargestellten) Schalters die Position des Hebels 9 verändert, d.h. der Hebel wird angehoben oder abgesenkt. Gleichzeitig wird mit Hilfe des Kabels 71 (oder auch manuell durch direkten Eingriff am Handgriff 61) die Position des Schaltventils verändert, so daß dieses die Lage nach Fig.2 einnimmt, also die Leitungsabschnitte 15 und 57 miteinander verbindet. Die gemeinsamen oder auch getrennt voneinander ausgelösten Kabelbetätigungen am Niveauregelventil und am Schaltventil lösen folgendes aus:
Da die Leitungsabschnitte 15 und 57 verbunden sind, gelangt Druckluft in den Druckraum 39 und verschiebt den Schieber 35 gegen die Kraft der Feder 37 in die in Fig.2 dargestellte Position. Hierdurch wird die Leitungsverbindung zwischen dem Leitungsabschnitt 25 und dem Leitungsabschnitt 41 hergestellt; der Druckluftauslaß 55 des Relaisventils steht über das Schieberventil gemäß Fig.2 in direkter Verbindung mit den Luftfederbälgen 1 und 3. Das Relaisventil 47, an dessen Drucklufteinlaß 51 ständig Druckluft des Vorratsbehälters 11 ansteht, wird vom ausgesteuerten Druck des Niveauregelventils gesteuert, d.h. der Druckluftausgang des Auslasses 21 wirkt über den Leitungabschnitt 25 und den Steueranschluß 49 auf den Steuerkolben des Relaisventils ein, so daß durch die bekannte Relaisfunktion Druckluft des Vorratsbehälters direkt in den Leitungsabschnitt 25 und demnach in die Luftfederbälge 1 und 3 gelangt. Die schnelle Belüftung der Luftfederbälge ist hierdurch sichergestellt.

Die Betätigung des Hebels 9 wurde vorstehend unter Bezugnahme auf die Belüftung der Luftfederbälge 1 und 3 erläutert. Durch in entgegengesetzter Richtung vollzogene Kabelbetätigung am Niveauregelventil kann in gleicher Weise das schnelle Entlüften der Luftfederbälge 1 und 3 vollzogen werden. Hierbei wird das Relaisventil 47 in bekannter Weise am Steueranschluß druckentlastet, so daß das Relaisventil eine Funktionsstellung einnimmt, in welcher der Leitungsabschnitt 25 und demnach die mit ihm verbundenen Luftfederbälge 1 und 3 über die (nicht dargestellte) Entlüftung am Relaiventil entlüftet werden, derart, daß die Luftfederbälge 1 und 3 absinken. Das Belüften und das Entlüften der Luftfederbälge erfolgt demnach jeweils über den großen Querschnitt des Relaisventils, dessen Funktion unter Verwendung des Schaltventils zugeschaltet oder abgeschaltet wird. Das Schaltventil befindet sich also auch beim Absenken bzw. Entlüften der Luftfederbälge 1 und 3 in der in Fig. 2 wiedergegebenen Position, in welcher das Schieberventil die in Fig.2 dargegestellte Lage einnimmt.

## Patentansprüche

1. Anlage zum gesteuerten Heben und Senken des Fahrzeugaufbaues von mit Luftfederung versehenen, niveaugeregelten Fahrzeugen, mit wenigstens einer Fahrzeugachse zugeordneten Luftfederbälgen, welche durch wenigstens ein Niveauregelventil entsprechend Einregelung eines Sollabstandes zwischen Fahrzeugaufbau und Fahrzeugachse belüftbar oder entlüftbar sind, und mit einem mechanisch auf das Niveauregelventil einwirkenden Betätigungsmechanismus zum willkürlichen Belüften und Entlüften der Luftfederbälge unabhängig vom Beladungszustand des Fahrzeugs, gekennzeichnet durch folgende Merkmale:
a) zwischen dem Auslaß (21) des Niveauregelventils (7) und dem Luftfederbalg (1,3) ist in einer ersten Verbindung (Leitungsabschnitte 23,41) ein Schieberventil (27) zwischengeschaltet;
b) das Schieberventil (27) ist zwischen einer die Verbindung zwischen Niveauregelventil und Luftfederbalg öffnenden und einer die Verbindung sperrenden Position verschiebbar; und
c) in einer parallel zur ersten Verbindung (Leitungsabschnitt 23) vom Auslaß (21) des Niveauregelventils zum Schieberventil (27) sich erstreckenden Verbindung (Leitungsabschnitt 25) ist ein Relaiventil (47) vorgesehen, derart, daß die beiden parallel verlaufenden Leitungsabschnitte (23;25) entsprechend Funktionsstellung des Schieberventils wechselweise mit dem Luftfederbalg (1,3) verbindbar sind.

2. Anlage nach Anspruch 1, gekennzeichnet durch folgende Merkmale:
a) das Schieberventil (27) weist einen Kolben (29,31,33) tragenden Schieber (35) auf, welcher durch die Kraft einer Feder (37) in die erste Funktionsstellung verschiebbar ist, in welcher der erste Leitungsabschnitt (23) den Auslaß (21) des Nieveauregelventils mit dem Luftfederbalg (1,3) verbindet, während der das Relaisventil (47) enthaltende Leitungsabschnitt (25) gegenüber dem Luftfederbalg (1,3) gesperrt ist; und
b) der Schieber (35) ist durch Druckmittel gegen die Kraft der Feder (37) in seine zweite Funktionsstellung verschiebbar, in welcher der erste Leitungsabschnitt (23) gegenüber dem Luftfederbalg gesperrt ist, während der das Relaisventil enthaltende Leitungsabschnitt (25) über das Schieberventil mit dem Luftfederbalg verbunden ist.

3. Anlage nach Anspruch 1 oder 2, dadurch gekennzeichnet, daß der Auslaß (21) des Niveauregelventils mit dem Steueranschluß (49) des Relaisventils (47) verbunden ist, während der Druckluftauslaß (55) des Relaisventils mit dem Schieberventil in Verbindung ist, und daß der Drucklufteinlaß (51) des Relaisventils über einen Leitungsabschnitt (15,13) mit dem Vorratsbehälter (11) der Anlage verbunden ist.

4. Anlage nach Anspruch 2 oder 3, dadurch gekennzeichnet, daß der Schieber (35) entlang seines Schieberschafts unter Abstand zueinander angeordnete Kolben (29,31,33) trägt, welche positionsabhängig die Verbindung der ersten und zweiten Leitungsabschnitte (23,25) mit einem an den Luftfederbalg (1,3) angeschlossenen dritten Leitungsabschnitt (41) sperren oder freigeben.

5. Anlage nach einem der vorangehenden Ansprüche, gekennzeichnet durch folgende Merkmale:
a) an einer Stirnseite des Schiebers (35) ist ein Druckraum (39) vorgesehen, an welchen ein Schaltventil (59) zum Einleiten von Druckuft bzw. zum Entlüften angeschlossen ist; und
b) das Schaltventil ist mechanisch in zwei Funktionsstellungen bewegbar, wobei in der ersten Funktionsstellung der Druckraum (39) über das Schaltventil entlüftet ist, während in der zweiten Funktionstellung der Druckraum über das Schaltventil mit Druckluft aus dem Vorratsbehälter (11) verbunden ist.

6. Anlage nach einem der vorangehenden Ansprüche, bei welcher der Betätigungsmechanismus zumn willkürlichen Betätigen des Niveauregelventils aus einem Kabelzug besteht, gekennzeichnet durch folgende Merkmale:
a) das Schaltventil (59) weist zum Umschalten von der ersten Funktionsstellung in die zweite Funktionsstellung einen Hebel (69) auf, an welchem ein Kabel (71) zum Zwecke der Betätigung befestigt ist; und
b) das den Betätigungshebel (9) des Niveauregelventils zum Zwecke des willkürlichen Hebens oder Senkens betätigende Kabel (67) ist mit dem Kabel (71) als gemeinsamer Kabelzug verbunden.

7. Anlage nach einem der vorangehenden Ansprüche, dadurch gekennzeichnet, daß das Schaltventil zum Zwecke mechanischer Umschaltung zusätzlich einen Handgriff (61) aufweist.

## Claims

1. Installation for the controlled raising and lowering of the vehicle body of height-regulated vehicles provided with air suspension, having air suspension bellows, associated with at least one vehicle axle, which can be aerated or ventilated by at least one height-regulation valve according to regulation of a desired spacing between the vehicle body and the vehicle axle, and having an actuation mechanism mechanically acting on the height-regulation valve for the arbitrary aeration and ventilation of the air suspension bellows independently of the load state of the vehicle, characterized by the following features:
a) a slide valve (27) is intermediately connected between the outlet (21) of the height-regulation valve (7) and the air suspension bellows (1, 3) in a first connection (line sections 23, 41);
b) the slide valve (27) can be moved between a position opening the connection between the height-regulation valve and the air suspension bellows and a position blocking the connection;
c) in a connection (line section 25) extending parallel to the first connection (line section 23) from the outlet (21) of the height-regulation valve to the slide valve (27) a relay valve (47) is provided so that the two line sections (23; 25) extending in parallel can be alternately connected to the air suspension bellows (1, 3) in accordance with the operating position of the slide valve.

2. Installation according to claim 1, characterised by the following features:
a) the slide valve (27) has a slide (35) carrying pistons (29, 31, 33) which can be moved by the force of a spring (37) into the first operating position, in which the first line section (23) connects the outlet (21) of the height-regulation valve to the air suspension bellows (1, 3), whilst the line section (25) containing the relay valve (47) is blocked with respect to the air suspension bellows (1, 3); and
b) the slide (35) can be moved by pressure means against the force of the spring (37) into its second operating position in which the first line section (23) is closed with respect to the air suspension bellows whilst the line section (25) containing the relay valve is connected by means of the slide valve to the air suspension bellows.

3. Installation according to claim 1 or 2, characterised in that the outlet (21) of the height-regulation valve is connected to the control terminal (49) of the relay valve (47), whilst the compressed air outlet (55) of the relay valve is in connection with the slide valve, and in that the compressed air inlet (51) of the relay valve is connected by means of a line section (15, 13) to the reservoir tank (11) of the installation.

4. Installation according to claim 2 or 3, characterised in that the slide (35) carries pistons (29, 31, 33), arranged spaced apart along its shaft, which, dependent on position, block or release the connection of the first and second line sections (23, 25) to a third line section (41) connected to the air suspension bellows (1, 3).

5. Installation according to one of the preceding claims, characterised by the following features:
a) at one end of the slide (35) there is provided a pressure chamber (39) to which a switch valve (59) is connected for introducing compressed air or for ventilation; and
b) the switch valve is mechanically movable into two operating positions, whereby in the first operating position the pressure chamber (39) is ventilated by means of the switch valve, whilst in the second operating position the pressure chamber is connected by means of the switch valve to compressed air from the reservoir tank (11).

6. Installation according to one of the preceding claims, in which the actuation mechanism for the arbitrary actuation of the height-regulation valve comprises a cable pull, characterised by the following features:
a) the switch valve (59) has a lever (69) for switching over from the first operating position into the second operating position, on which lever a cable (71) is secured for the purpose of actuation; and
b) the cable (67) actuating the actuation lever (9) of the height-regulation valve for arbitrarily lifting or lowering is connected to the cable (71) as a common cable pull.

7. Installation according to one of the preceding claims, characterised in that in addition the switch valve has a handle (61) for the purpose of mechanical switch-over.

## Revendications

1. Dispositif pour la montée et la descente commandées de la caisse de véhicules munis d'une suspension à air, avec régulation de l'assiette, comportant des coussins pneumatiques affectés au moins à un essieu du véhicule, qui peuvent être remplis d'air ou vidés grâce à au moins une valve de régulation d'assiette, en fonction de la régulation d'une distance prescrite entre la caisse du véhicule et l'essieu du véhicule, comportant également un mécanisme d'actionnement agissant mécaniquement sur la valve de régulation d'assiette en vue de remplir, et de vider, à volonté les coussins pneumatiques, indépendemment de l'état de charge du véhicule, caractérisé en ce que :
a) entre la sortie (21) de la valve (7) de régulation d'assiette et le coussin pneumatique (1, 3) une valve (27) à tiroir est montée dans une première liaison (conduits 23, 41) ;
b) la valve (27) à tiroir peut être déplacée entre une position d'ouverture de la liaison entre la valve de régulation d'assiette et le coussin pneumatique, et une position de fermeture de la liaison ; et
c) une valve de relais (47) est prévue dans une liaison (conduit 25) en parallèle avec la première liaison (conduit 23), allant de la sortie (21) de la valve de régulation de niveau à la valve à tiroir (27), de façon telle eue les deux conduits (23 ; 25) en parallèle puissent être alternativement mis en communication avec le coussin pneumatique (3), en fonction de la position de fonctionnement de la valve à tiroir.

2. Dispositif selon la revendication 1, caractérisé en ce que :
a) la valve (27) à tiroir comporte un coulisseau (35) portant un piston (29, 31, 33) qui peut être mis par la force d'un ressort (37) dans la première position de fonctionnement, dans laquelle le premier conduit (23) fait communiquer la sortie (21) de la valve de régulation d'assiette avec le coussin pneumatique (1, 3), tandis que le conduit (25) comportant la valve de relais (47) est fermée par rapport au coussin pneumatique (1, 3) ; et
b) en ce que le coulisseau (35) peut être déplacé au moyen d'un fluide de pression, à l'encontre de la force du ressort (37) jusque dans sa deuxième position de fonctionement, dans laquelle le premier conduit (23) est fermé par rapport au coussin pneumatique, tandis que le conduit (25) comportant la valve de relais est mis en communication avec le coussin pneumatique par la valve à tiroir.

3. Dispositif selon la revendication 1 ou 2, caractérisé en ce que la sortie (21) de la valve de régulation d'assiette communique avec le raccordement (49) de commande de la valve de relais (47) tandis que la sortie d'air comprimé (55) de la valve de relais communique avec la valve à tiroir et que l'entrée (51) d'air comprimé de la valve de relais communique par un conduit (15, 13) avec le réservoir (11) du dispositf.

4. Dispositif selon la revendication 2 ou 3, caractérisé en ce que le coulisseau (35) porte le long de son fût, des pistons (29, 31, 33) disposés à distance les uns des autres, qui interrompent ou établissent, en fonction de leur position , la communication des premier et deuxième conduits (23, 25), avec un troisième conduit (41) raccordé au coussin pneumatique (1, 3).

5. Dispositif selon l'une des revendications précédentes, caractérisé en ce que :
a) une chambre de pression (39) est prévue sur un des côtés frontaux du coulisseau (35), à laquelle est raccordée une valve (59) de commuta tion destinée à l'introduction d'air comprimé, ou à son évacuation ; et
b) la valve de commutation peut être déplacée mécaniquement pour être mise dans deux positions de fonctionnement, l'air étant évacué hors de la chambre de pression (39) au moyen de la valve de commutation dans la première position de fonctionnement, tandis que dans la deuxième position de fonctionnement la chambre de pression est en communication avec l'air comprimé provenant du réservoir (11).

6. Dispositif selon l'une des revendications précédentes, dans lequel le mécanisme d'actionnement destiné à l'actionnement à volonté de la valve de régulation d'assiette est constitué d'une transmission à à câble, caractérisé en ce que :
a) la valve de commutation (59) comporte, pour le passage de la première position de fonctionnement à la deuxième position de fonctionnement, un levier (69) sur lequel est fixé un câble (71) en vue de l'actionnement ;
b) le câble (67) actionnant le levier d'actionnement (9) de la valve de régulation d'assiette, en vue de la montée ou de la descente volontaires, est relié au câble (71) en formant une transmission à câble commune.

7. Dispositif selon l'une des revendications précédentes, caractérisé en ce que la valve de commutation comporte en outre une - manette (61) en vue d'une commutation mécanique.
